(19) **Europäisches Patentamt**
**European Patent Office**
**Office européen des brevets**

(11) **EP 3 200 469 A1**

(12) **EUROPEAN PATENT APPLICATION**

(43) Date of publication:
**02.08.2017 Bulletin 2017/31**

(51) Int Cl.:
***H04N 21/43*** *(2011.01)*

(21) Application number: **16207421.5**

(22) Date of filing: **29.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.01.2016 TW 105102437**

(71) Applicant: **MStar Semiconductor, Inc.**
**Chupei 302 (TW)**

(72) Inventors:
• **Dornstetter, Jean-Louis**
**78460 Choisel (FR)**

• **Wang, Kun-Yu**
**302 Chupei (TW)**
• **Lai, Ko-Yin**
**302 Chupei (TW)**
• **Tung, Tai-Lai**
**302 Chupei (TW)**
• **Liao, Yi-Ying**
**302 Chupei (TW)**

(74) Representative: **Mollekopf, Gerd Willi**
**Kahler Käck Mollekopf**
**Partnerschaft von Patentanwälten mbB**
**Vorderer Anger 239**
**86899 Landsberg/Lech (DE)**

(54) **SYMBOL DETECTION CIRCUIT AND METHOD**

(57)     The invention relates to a detection circuit, applied to a Digital Video Broadcasting receiver to detect a position of a data frame of an input signal, the input signal comprising a continuous wave interference component, the detection circuit comprising: a correlation calculation circuit (41), generating a correlation signal according to the input signal; a first moving average circuit (42), coupled to the correlation calculation circuit (41), performing a moving average calculation on the correlation signal to generate a first moving average result; a frequency shift circuit (418), coupled to the correlation calculation circuit (41), performing a frequency shift operation on the correlation signal to generate a frequency shifted correlation signal; a second moving average circuit (43), coupled to the frequency shift circuit (418), performing a moving average calculation on the frequency shifted correlation signal to generate a second moving average result; a calculation circuit (44, 60), coupled to the first moving average circuit (42) and the second moving average circuit (43), eliminating the continuous wave interference component according to the first moving average result and the second moving average result and accordingly generating an output signal; and a determination circuit (49), coupled to the calculation circuit, determining the position according to a peak of the output signal.

The invention also relates to a detection method applied to a Digital Video Broadcasting (DVB) receiver to detect a position of a data frame of an input signal. The input signal includes a continuous wave interference component. The method includes generating a correlation signal according to the input signal, performing a moving average calculation on the correlation signal to generate a first moving average result, performing a frequency shift operation on the correlation signal to generate a frequency shifted correlation signal, performing the moving average calculation on the frequency shifted correlation signal to generate a second moving average result, eliminating the continuous wave interference component according to the first moving average result and the second moving average result and accordingly generating an output signal, and determining the position according to a peak of the output signal.

$$X[n] \longrightarrow \boxed{\begin{array}{c}\text{Correlation} \\ \text{calculation} \\ \text{circuit}\end{array}} \xrightarrow{C\_I\_0[n]} \boxed{\begin{array}{c}\text{MA} \\ (542T_S)\end{array}} \rightarrow \boxed{\begin{array}{c}\text{Calculation} \\ \text{circuit}\end{array}} \xrightarrow{C\_II\_I[n]} \boxed{\begin{array}{c}\text{Determination} \\ \text{circuit}\end{array}}$$

41

418

$$\boxed{\begin{array}{c}\text{Frequency} \\ \text{shift circuit}\end{array}} \rightarrow \boxed{\begin{array}{c}\text{MA} \\ (542T_S)\end{array}}$$

43

$$\exp(-j2\pi f_{SH}nT_S)$$

44

49

## FIG. 3

**Description**

**Field of the Invention**

The invention relates in general to a symbol detection circuit and method, and more particularly to a symbol detection circuit and method for a Digital Video Broadcasting over Terrestrial 2 (DVB-T2) system.

**Description of the Related Art**

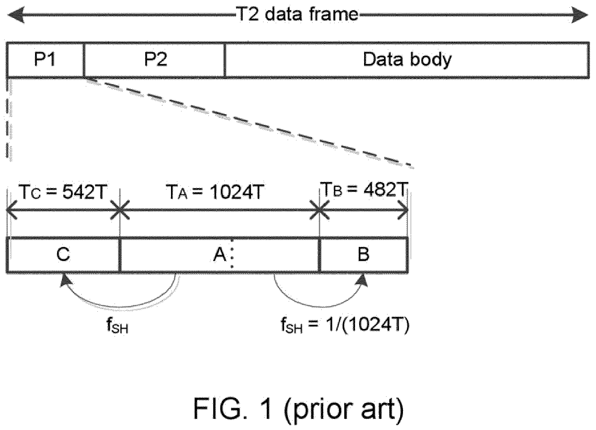

FIG. 1 shows a schematic diagram of a T2 data frame of a Digital Video Broadcasting over Terrestrial 2 (DVB-T2) signal. Each T2 data frame includes a P1 symbol, a P2 symbol and a data body. The P1 symbol carries certain information of a transmitter, e.g., a fast Fourier transform (FFT) mode adopted for modulating data, and whether the DVB-T2 system is single-input-single-output (SISO) or multiple-input-single-output (MISO). In addition to carrying the above critical information, the P1 symbol may be further used to detect certain properties of a data stream, e.g., a starting position of a T2 data frame, carrier frequency offset (CFO), and spectral inversion (IQ swap (IQS), swapping an in-phase component and a quadrature-phase component).

A P1 symbol includes data C (having 542 sample counts and a time length TC), data A (having 1024 sample counts and a time length TA) and data B (having 482 sample counts and a time length TB). Data C is a frequency shifted result of first 542 samples (data C') of data A, and data B is a frequency shifted result of last 482 samples (data B') of data A. A frequency shift $f_{SH}$ is 1/1024T, where T is a sampling period of a T2 data frame. The P1 symbol may be represented as:

$$p_1(t) = \begin{cases} p_{1A}(t) \cdot \exp(j2\pi f_{SH} t), 0 \leq t < 542T, \\ p_{1A}(t - 542T), 542T \leq t < 1566T, \\ p_{1A}(t - 1024T) \cdot \exp(j2\pi f_{SH} t), 1566T \leq t < 2048T, \\ 0, \text{otherwise}. \end{cases}$$

In the above, $p_{1A}$ is contents of data A.

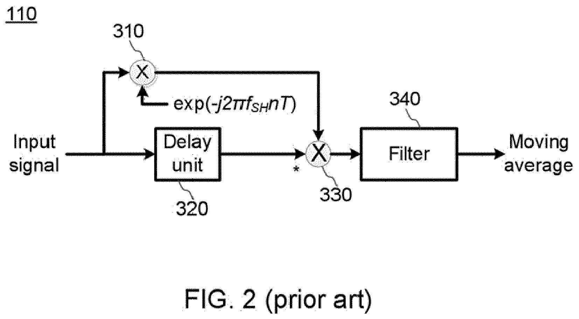

Because data C and data B are respectively generated by frequency shifting a part of data A, a detection unit 110 may determine the position of the P1 symbol through comparing correlations between data B and C with data A to further obtain data in the symbol P1 and to learn a starting position of the T2 data frame. FIG. 2 shows a detailed circuit diagram of a conventional detection unit 110. After entering the detection unit 110, an input signal is multiplied on one of the paths by $\exp(-j2\pi f_{SH} nT)$ by a multiplier 310 to cause the input signal to be frequency shifted (with the shift being $- f_{SH}$). On the other path, the input signal is delayed by 482T or 542T (respectively corresponding to performing a correlation operation using data B or data C) by a delay unit 320. Next, a multiplier 330 performs a multiplication on the frequency shifted signal and the conjugate complex of the delayed signal, and a filter 340 performs a moving average calculation to obtain a moving average of a correlation value. By identifying a position of a maximum of the moving average of the correlation value and with reference to the delay time of the delay unit 320, the starting position of the P1 symbol may then be calculated. Because the frequency shift $f_{SH}$ is 1/1024T, given that a window length of the filter 340 equals to the length of data A (i.e., 1024T), continuous wave interference (also known as co-channel interference, CCI) may be at the same time filtered out from the input signal, so as to prevent the CCI from interfering the correlation value and to obtain a more accurate starting position. However, the above results in a longer filtering period of the filter 340. In contrast, if the filter 340 adopts a shorter window length (e.g., 482T or 542T), CCI may not be completely filtered out even though the correlation value can be more quickly obtained. The above limitations compel the conventional circuit to trade off between detection speed and accuracy.

**SUMMARY OF THE INVENTION**

The invention is directed to a symbol detection circuit and method for enhancing detection speed and performance.

The invention is defined in claims 1 and 9, respectively. Particular embodiments are set out in the dependent claims.

The present invention discloses a detection circuit applied to a Digital Video Broadcasting (DVB) receiver to detect a position of a data frame of an input signal. The input signal includes a continuous wave interference component. The detection circuit includes: a correlation calculation circuit, generating a correlation signal according to the input signal; a first moving averaging circuit, coupled to the correlation calculation circuit, performing a moving average calculation on the correlation signal to generate a first moving average result; a frequency shift circuit, coupled to the correlation calculation circuit, performing a frequency shift operation on the correlation signal to generate a frequency shifted correlation signal; a second moving average circuit, coupled to the frequency shift circuit, performing a moving average calculation on the frequency shifted correlation signal to generate a second moving average result; a calculation circuit, coupled to the first moving average circuit and the second moving average circuit, eliminating the continuous wave interference component according to the first moving average result and the second moving average result, and accordingly generating an output signal; and a determination circuit, coupled to the calculation circuit, determining the position according to a peak of the output signal.

The present invention further discloses a detection method applied to a Digital Video Broadcasting (DVB) receiver to detect a position of a data frame of an input signal. The input signal includes a continuous wave interference component. The method includes generating a correlation signal according to the input signal, performing a moving average calculation on the correlation signal to generate a first moving average result, performing a frequency shift operation on the correlation signal to generate a frequency shifted correlation signal, performing the moving average calculation on the frequency shifted correlation signal to generate a second moving average result, eliminating the continuous wave interference component according to the first moving average result and the second moving average result and accordingly generating an output signal, and determining the position according to a peak of the output signal.

Compared to the prior art, the symbol detection circuit and method of the present invention adopt a shorter filtering time and at the same time effectively eliminate continuous wave interference.

Preferably in the detection circuit and/or the method the Digital Video Broadcasting is applied to broadcasting over a Terrestrial 2 (DVB-T2) system and/or using a Terrestrial 2 (DVB-T2) method.

The features of the detection circuit as disclosed in the claims, the description and the figures can be combined into any combination or sub-combination of features for the detection circuit. The features of the detection method as disclosed in the claims, the description and the figures can be combined into any combination or sub-combination of features for the detection method. In the same way any features relating to the detection method can be combined with any combination of features of the detection circuit and the features relating to the detection circuit can be combined with any combination of features of the detection method.

The above and other aspects of the invention will become better understood with regard to the following detailed description of the preferred but non-limiting embodiments. The following description is made with reference to the accompanying drawings.

## BRIEF DESCRIPTION OF THE DRAWINGS

FIG. 1     is a schematic diagram of a T2 data frame of a DVB-T2 system;

FIG. 2     is a circuit diagram of a conventional detection unit;

FIG. 3     is a circuit diagram of a P1 symbol detection circuit according to an embodiment of the present invention;

FIG. 4     is a detailed circuit diagram of FIG. 3 according to an embodiment of the present invention;

FIG. 5     is a correspondence diagram of an input signal X[n], a delay in the input signal X[n] and a signal C_II_I[n] on the time axis;

FIG. 6     is a circuit diagram of a P1 symbol detection circuit according to another embodiment of the present invention;

FIG. 7     is a detailed circuit diagram of a calculation circuit 54;

FIG. 8     is a correspondence diagram of an input signal X[n], a delay in the input signal X[n], a signal C_II_I[n] and a signal B_II_I[n] on the time axis;

FIG. 9     is a circuit diagram of a P1 symbol detection circuit according to another embodiment of the present invention;

FIG. 10    is a circuit diagram of a P1 symbol detection circuit according to another embodiment of the present invention; and

FIG. 11    is a block diagram of a P1 symbol detection circuit of the present invention applied in conjunction with a determination circuit to a receiver of a DVB-T2 system.

**DETAILED DESCRIPTION OF THE INVENTION**

The disclosure of the application includes a symbol detection circuit and method. In possible implementation, one skilled person in the art may choose equivalent elements or steps to implement the present invention based on the disclosure of the application. That is, the implementation of the present invention is not limited by the embodiments disclosed in the application.

Assuming that an input signal of a Digital Video Broadcasting over Terrestrial 2 (DVB-T2) receiver is expressed as:

$$X[n] = P_1[n - \theta] \cdot \exp(j2\pi\Phi nT_S) + \exp(j2\pi f_{CW} nT_S) \qquad \ldots\ldots (1)$$

In equation (1),

$P_1[n - \theta] \cdot \exp(j2\pi\Phi nT_S)$ is the P1 symbol,
$\theta$ represents sampling delay,
$\Phi$ represents carrier frequency offset, and
$\exp(j2\pi f_{CW} nT_S)$ represents single-tone continuous wave interference (having a frequency $f_{CW}$).

For better illustrations, channel effect and noise are omitted. By first delaying $X[n]$ by $T_C$ (i.e., the length of data C, 542 sample counts) and then multiplying by its conjugate complex, a signal $C\_I\_0[n]$ is obtained:

$$C\_I\_0[n] = X[n - n_c] \cdot X^*[n] = \exp(-j2\pi f_{CW} T_C) \cdot 1 + |P_1[n - \theta]|^2 \cdot \exp(-j2\pi(f_{SH} + \Phi)T_C) \cdot \exp(j2\pi f_{SH} nT_S) + \cdots\ldots\ldots (2)$$

In equation (2), the remainder "..." and $\exp(j2\pi f_{SH} nT_S)$ are orthogonal.

The signal $C\_I\_0[n]$ is then delayed by $2T_B$ (i.e., twice the length of data B, 964 sample counts), a signal $C\_I[n]$ is obtained:

$$C\_I[n] = C\_I\_0[n - 2n_B] = \exp(-j2\pi f_{CW} T_C) \cdot 1 + |P_1[n - 2n_B - \theta]|^2 \cdot \exp(-j2\pi(f_{SH} + \Phi)T_C) \cdot \exp(-j4\pi f_{SH} T_B) \cdot \exp(j2\pi f_{SH} nT_S) + \cdots\ldots\ldots (3)$$

Equation (3) is simplified as follows:

$$C\_I[n] = a\_C \cdot 1 + b\_C \cdot \rho^n + \cdots \qquad \ldots\ldots (4)$$

In equation (4),

$a\_C = \exp(-j2\pi f_{CW} T_C)$ is the continuous wave interference,
$b\_C = |P_1[n - 2n_B - \theta]|^2 \cdot \exp(-j2\pi(f_{SH} + \Phi)T_C) \cdot \exp(-j4\pi f_{SH} T_B)$ is the P1 symbol, and
$\rho = \exp(j2\pi f_{SH} T_S)$.

Next, $C\_I[n]$ is accumulated for 542 consecutive sampling points (corresponding to the delay time $T_C$ in the input signal $X[n]$ in equation (2)), and a signal $C\_S[n]$ is obtained:

$$C\_S[n] = C\_I[n] + C\_I[n-1] + \cdots + C\_I[n - 542 + 1]$$

$$= 542 \cdot \text{a\_C} + \text{b\_C} \cdot \rho^{n-(542-1)/2} \cdot (\rho^{(542-1)/2} + \rho^{(542-1)/2-1} + \cdots + \rho^{(1-542)/2})$$

$$= 542 \cdot \text{a\_C} + \text{b\_C} \cdot \rho^{n-(542-1)/2} \cdot \lambda \qquad \ldots\ldots (5)$$

In equation (5),

$$\lambda \triangleq \rho^{(L-1)/2} + \rho^{(L-1)/2-1} + \cdots + \rho^{(1-L)/2}$$

$$= \frac{\rho^{(L-1)/2} \cdot (1 - \rho^{-L})}{1 - \rho^{-1}}$$

$$= \frac{\rho^{-1/2} \cdot (\rho^{L/2} - \rho^{-L/2})}{\rho^{-1/2} \cdot (\rho^{1/2} - \rho^{-1/2})}$$

$$= \frac{\sin(\pi L/1024)}{\sin(\pi/1024)}$$

$$\approx L \cdot \frac{\sin(\pi L/1024)}{\pi L/1024}$$

$$= L \cdot \text{Sinc}(L/1024),$$

wherein, assuming that $\pi/1024$ approximates 0, $\sin\left(\dfrac{\pi}{1024}\right)$ may then approximate $\dfrac{\pi}{1024}$. When L=542 or 482, the value of $\lambda$ is approximately 324.5686967.

On the other hand, after frequency shifting the signal $C\_I[n]$ by $-f_{SH}$ (i.e., multiplying by $\exp(-j2\pi f_{SH} n T_S)$), and accumulating for 542 consecutive sampling points (corresponding to the delay time $T_C$ in the input signal $X[n]$ in equation (2)), a signal below is obtained:

$$\text{C\_T1}[n] = \rho^{-n} \cdot \text{C\_I}[n] + \rho^{-(n-1)} \cdot \text{C\_I}[n-1] + \cdots + \rho^{-(n-542+1)} \cdot \text{C\_I}[n - 542 + 1]$$

$$= 542 \cdot \text{b\_C} + \text{a\_C} \cdot \rho^{(542-1)/2-n} \cdot (\rho^{(542-1)/2} + \rho^{(542-1)/2-1} + \cdots + \rho^{(1-542)/2})$$

$$= 542 \cdot \text{b\_C} + \text{a\_C} \cdot \rho^{(542-1)/2-n} \cdot \lambda \qquad \ldots\ldots (6)$$

Equation (5) and equation (6) may be respectively rewritten as equation (7) and equation (8) below:

$$\rho^{(542-1)/2-n} \cdot C\_S[n] = 542 \cdot \text{a\_C} \cdot \rho^{(542-1)/2-n} + \text{b\_C} \cdot \lambda \qquad \ldots\ldots (7)$$

$$C\_T1[n] = 542 \cdot \text{b\_C} + \text{a\_C} \cdot \rho^{(542-1)/2-n} \cdot \lambda \qquad \ldots\ldots (8)$$

Equation (7) and equation (8) are expressed in form of a matrix:

$$\begin{bmatrix} a\_C \cdot \rho^{(542-1)/2-n} \\ b\_C \end{bmatrix} = \begin{bmatrix} 542 & \lambda \\ \lambda & 542 \end{bmatrix}^{-1} \cdot \begin{pmatrix} \rho^{(542-1)/2-n} \cdot C\_S[n] \\ C\_T1[n] \end{pmatrix}$$

$$= \frac{1}{542} \cdot \begin{bmatrix} 1.559 & -0.934 \\ -0.934 & 1.559 \end{bmatrix} \cdot \begin{pmatrix} \rho^{(542-1)/2-n} \cdot C\_S[n] \\ C\_T1[n] \end{pmatrix} \qquad \ldots\ldots (9)$$

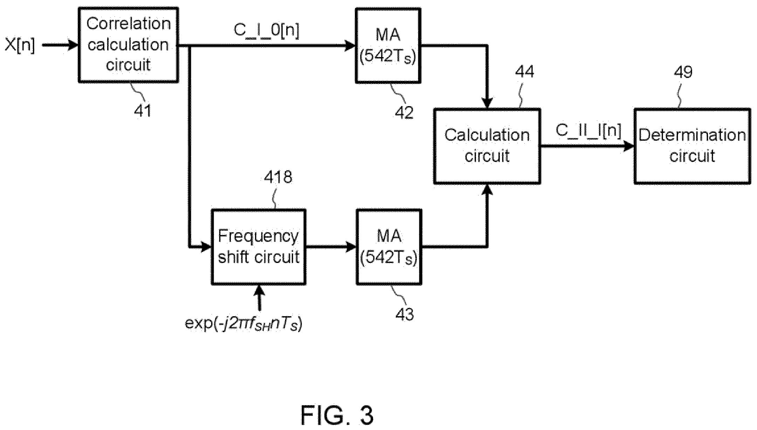

It is seen from equation (9) that, by frequency shifting the signal $C\_S[n]$ and then performing a linear operation with the signal $C\_T1[n]$, a component b_C corresponding to the P1 symbol may be obtained, i.e., a component a_C of the continuous wave interference is removed. The above linear operation is easily feasible from the aspect of a circuit, as shown in FIG. 3.

FIG. 3 shows a circuit diagram of a P1 symbol detection circuit according to an embodiment of the present invention. A correlation calculation circuit 41 may realize equation (2), and a moving average circuit 42 performs a moving average calculation on 542 consecutive sampling points of the signal $C\_I\_0[n]$. On the other hand, a moving average circuit 43 performs a moving average calculation on 542 consecutive sampling points of the signal $C\_I\_0[n]$ that have been frequency shifted (performed by a frequency shift circuit 418, which may be implemented by a multiplier, or achieved by a frequency shift operation performed by a central processing unit or a microcontroller). A calculation circuit 44 calculates outputs of the moving average circuit 42 and the moving average circuit 43 to obtain the signal $C\_II\_I[n]$, from which the continuous wave interference is removed. The determination circuit 49 then calculates in reverse for a starting position of data A of the input signal $X[n]$ according to a position of a maximum value of the signal $C\_II\_I[n]$.

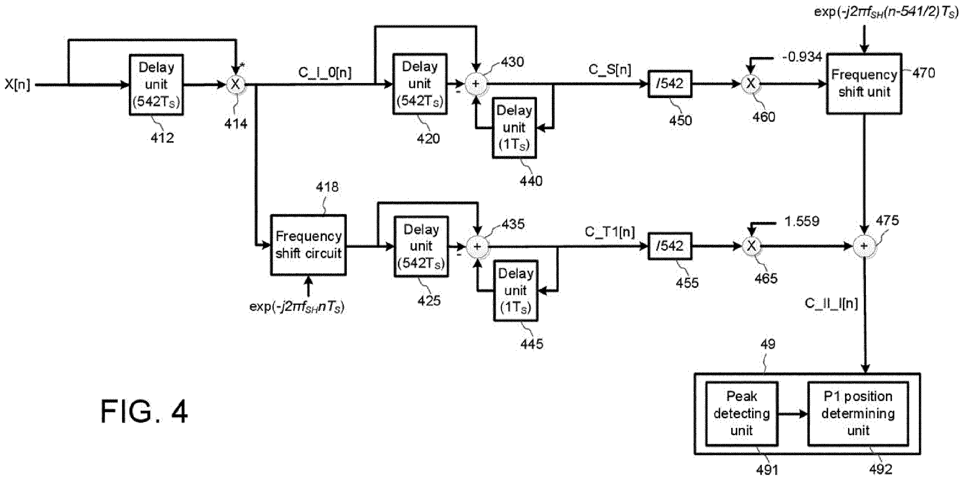

FIG. 4 shows a detailed circuit diagram of FIG. 3 according to an embodiment. The correlation calculation circuit 41 includes a delay unit 412 and a multiplier 414. The moving average circuit 42 includes an accumulating unit and an averaging unit, wherein the accumulating unit includes a delay unit 420, an adder 430 and a delay unit 440 in FIG. 4, and the averaging unit is implemented by a divider 450. Similarly, the moving average circuit 43 includes an accumulating unit and an averaging unit, wherein the accumulating unit includes a delay unit 425, an adder 435 and a delay unit 445 in FIG. 4, and the averaging unit is implemented by a divider 455. The calculation circuit 44 includes a multiplier 460, a multiplier 465, a frequency shift unit 470 and an adder 475 in FIG. 4. The determination circuit 49 includes a peak detecting unit 491 and a P1 position determining unit 492.

The delay unit 412 and the multiplier 414 may realize equation (2). The delay unit 420, the adder 430 and the delay unit 440 accumulate 542 consecutive sampling points of the signal $C\_I\_0[n]$ to obtain the signal $C\_S[n]$. On the other hand, the delay unit 425, the adder 435 and the delay unit 445 accumulates 542 consecutive sampling points that have been frequency shifted (performed by a frequency shift circuit 418) to obtain the signal $C\_T1[n]$. After the signals $C\_S[n]$ and $C\_T1[n]$ are obtained, equation (9) may be realized by the divider 450 (dividing by 542), the divider 455 (dividing by 542), the multiplier 460 (multiplying by - 0.934), the multiplier 465 (multiplying by 1.559), the frequency shift unit 470 (frequency shifting the signal $C\_S[n]$) and the adder 475, so as to obtain the signal $C\_II\_I[n]$, from which the continuous wave interference is removed.

The peak detecting unit 491 detects a peak (i.e., a maximum correlation value) of the signal $C\_II\_I[n]$, and transmits the position information of the peak to the P1 position determining unit 492. The P1 position determining unit 492 then calculates and obtains a correct position of the P1 symbol in the T2 data frame according to the delay (e.g., $542T_S$ or $482T_S$) that preceding circuits applied on the input signal.

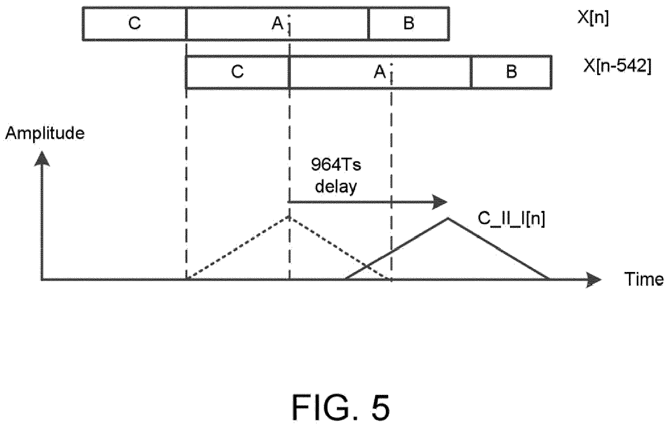

FIG. 5 is a correspondence diagram of the input signal $X[n]$, the input signal $X[n]$ having been delayed and the signal $C\_II\_I[n]$ on the time axis. In the circuit in FIG. 3 or FIG. 4, the delay unit 412 of the correlation calculation circuit 41 delays the input signal $X[n]$ by $542T_S$, which causes data C of the input signal $X[n]$ having been delayed to exactly overlap the first half of data A of the input signal $X[n]$. Thus, after having been processed by the correlation calculation circuit 41, the frequency shift circuit 418, the moving average circuit 42, the moving average circuit 43 and the calculation circuit 44, the signal $C\_II\_I[n]$ generated contains a maximum value as time changes, and the starting position of data A of the input signal $X[n]$ may then be calculated in reverse. The circuit in FIG. 3 or FIG. 4 causes the front half of data A of the input signal $X[n]$ to overlap data C of the input signal $X[n]$ to perform the correlation calculation, and so a window length of $542T_S$ is required to effectively generate such maximum value. Similarly, in another embodiment, the last half of data A of the input signal $X[n]$ may be caused to overlap data B of the input signal $X[n]$ to perform the correlation calculation, and then a window length of only $482T_S$ is needed to effectively generate the maximum value.

Compared to the conventional detection unit 110, the P1 symbol detection circuit of the present invention at least provides features below.

1. The filter 340 of the conventional detection unit 110 needs to have a window length of $1024T_S$ in order to filter out the continuous wave interference, whereas the filter (i.e., the moving average circuit 42 and the moving average circuit 43) in FIG. 3 needs a window length of only $542T_S$ (to process data C) or $482T_S$ (to process data B). Thus, without compromising the detection accuracy, the present invention significantly reduces the processing time of the filter.

2. The filtered signal outputted from the filter 340 of the conventional detection unit 110 is free from any continuous wave interference, whereas the filtered signal outputted from the filter of the present invention contains a continuous wave interference component. However, by performing a part of the multiplication and addition of equation (9) by the calculation circuit 44, the component b_C of the P1 symbol is extracted from the two filtered signals outputted from the moving average circuit 42 and the moving average circuit 43, and the continuous wave interference component is filtered out. Except in the frequency shift process, the coefficients used by the calculation circuit 44 are all real numbers, which are easily feasible from the aspect of circuits at low costs.

3. In the correlation calculation performed by the conventional detection unit 110, one of the two signals is frequency shifted relative to the input signal (with the frequency shift being $-f_{SH}$, performed by the multiplier 310). In contrast, the two signals (i.e., the two input signals of the multiplier 414) multiplied by the correlation calculation circuit 41 of the present invention are not frequency shifted relative to the input signal $X[n]$.

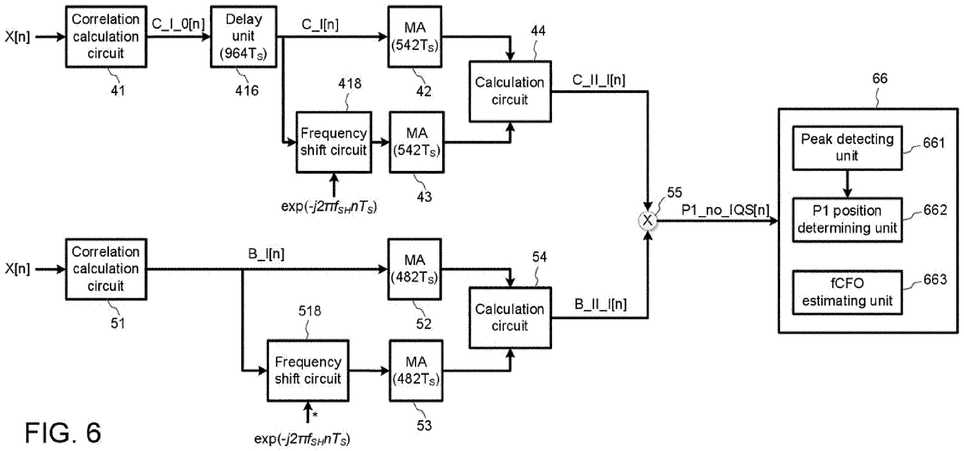

FIG. 6 shows a circuit diagram of a P1 symbol detection circuit according to another embodiment of the present invention. The circuit in FIG. 6 includes two paths. The circuit at the upper path, similar to that shown in FIG. 4, further includes an additional delay unit 416, and processes the input signal $X[n]$ to output the signal $C\_II\_I[n]$. The circuit at the lower path, also similar to that shown in FIG. 4, processes the input signal $X[n]$ and outputs a signal $B\_II\_I[n]$. Detailed circuits of the correlation calculation circuit 51 are identical to those of the correlation calculation circuit 41, with however the delay unit of the correlation calculation circuit 51 delaying by $482T_S$ instead of $542T_S$. Thus, a signal $B\_I[n]$ is represented as:

$$B\_I[n] = \exp(-j2\pi f_{CW}T_B) \cdot 1 + |P_1[n-\theta]|^2 \cdot \exp(-j2\pi\Phi T_B) \cdot \exp(-j2\pi f_{SH}nT_S) + \ldots$$

$$\ldots\ldots (10)$$

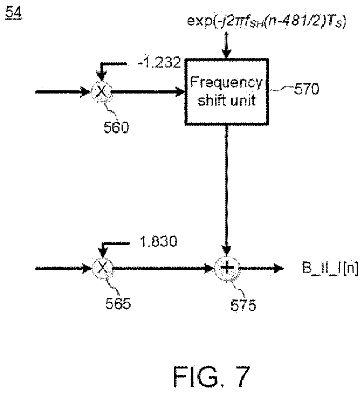

Similarly, the signal B_I[n] is calculated by the moving average circuit 52, and is also frequency shifted (by a frequency shift $f_{SH}$ by a frequency shift circuit 518 and also undergoes a conjugate complex calculation) and is then calculated by the moving average circuit 53. It should be noted that, window length of the moving average circuit 52 and the moving average circuit 53 are both $482T_S$ (corresponding to the delay time $482T_S$ of the correlation calculation circuit 51). The signals of the two are then calculated by the calculation circuit 54 to obtain the signal $B\_II\_I[n]$. The circuit of the calculation circuit 54 is identical to that of the calculation circuit 44, with however different coefficients used. As shown in FIG. 7, the output of the moving average circuit 52 is multiplied by -1.232 by a multiplier 560 and then frequency shifted by a frequency shift unit 570; the output of the moving average circuit 53 is multiplied by 1.830 by a multiplier 565, and then added with the signal of the other path by an adder 575 to form the signal $B\_II\_I[n]$. The coefficients adopted by the calculation circuit 54 and the frequency shift may be deduced and obtained as follows:

$$B\_I[n] = a\_B \cdot 1 + b\_B \cdot \rho^{-n} + \cdots \qquad\qquad \ldots\ldots \quad (11)$$

In equation (11),

a_B = $\exp(-j2\pi f_{CW}T_B)$ is the continuous wave interference,
b_B = $|P_1[n-\theta]|^2 \cdot \exp(-j2\pi\Phi T_B)$ is the P1 symbol, and
$\rho = \exp(j2\pi f_{SH}T_S)$.

Next, 482 consecutive sampling points (corresponding to the delay time $T_B = 482T_S$ by which the input signal $X[n]$ is delayed in equation (10)) of the signal $B\_I[n]$ are accumulated to obtain a signal $B\_S[n]$:

$$B\_S[n] = B\_I[n] + B\_I[n-1] + \cdots + B\_I[n-482+1]$$

$$= 482 \cdot a\_B + b\_B \cdot (\rho^*)^{n-(482-1)/2} \cdot \lambda \qquad\qquad \ldots\ldots \quad (12)$$

On the other hand, by frequency shifting the signal $B\_I[n]$ by $f_{SH}$ (i.e., multiplying by $\exp(j2\pi f_{SH} n T_S)$), and accumulating 482 consecutive sampling points, a signal below may be obtained:

$$B\_T1[n] = \rho^n \cdot B\_I[n] + \rho^{(n-1)} \cdot B\_I[n-1] + \cdots + \rho^{(n-482+1)} \cdot B\_I[n-482+1]$$

$$= 482 \cdot b\_B + a\_B \cdot (\rho^*)^{(482-1)/2-n} \cdot \lambda \qquad \ldots\ldots (13)$$

Equation (12) and equation (13) may be respectively rewritten as equation (14) and equation (15) below:

$$\rho^{n-(482-1)/2} \cdot B\_S[n] = 482 \cdot a\_B \cdot \rho^{n-(482-1)/2} + b\_B \cdot \lambda \qquad \ldots\ldots (14)$$

$$B\_T1[n] = 482 \cdot b\_B + a\_B \cdot \rho^{n-(482-1)/2} \cdot \lambda \qquad \ldots\ldots (15)$$

Equation (14) and equation (15) are expressed in form of a matrix:

$$\begin{bmatrix} a\_B \cdot \rho^{n-(482-1)/2} \\ b\_B \end{bmatrix} = \begin{bmatrix} 482 & \lambda \\ \lambda & 482 \end{bmatrix}^{-1} \cdot \begin{pmatrix} \rho^{n-(482-1)/2} \cdot B\_S[n] \\ B\_T1[n] \end{pmatrix}$$

$$= \frac{1}{482} \cdot \begin{bmatrix} 1.830 & -1.232 \\ -1.232 & 1.830 \end{bmatrix} \cdot \begin{pmatrix} \rho^{n-(482-1)/2} \cdot B\_S[n] \\ B\_T1[n] \end{pmatrix} \qquad \ldots\ldots (16)$$

Thus, the coefficients and frequency offset adopted by the calculation circuit 54 may be obtained. Meanwhile, it is proven that, from the output signal $B\_II\_I[n]$ that the calculation circuit 54 outputs, the continuous wave interference component a_B is already removed and only the component b_B corresponding to the P1 symbol is preserved.

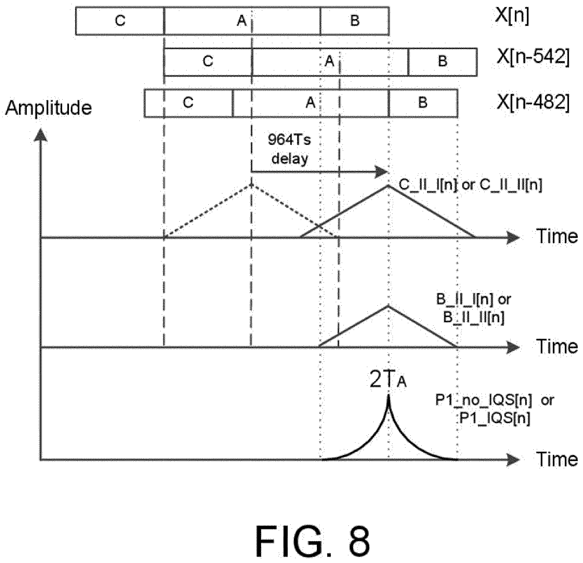

FIG. 8 shows a correspondence diagram of the input signal $X[n]$, two delayed input signal $X[n]$, a signal $C\_II\_I[n]$ and a signal $B\_II\_I[n]$ on the time axis. The signal $B\_II\_I[n]$ is a result of a correlation calculation performed according to data B, and thus produces a maximum value at a time point $2T_A$. As the detection circuit in FIG. 6 includes the delay unit 416, the maximum value of the signal $C\_II\_I[n]$ similarly falls at the time point $2T_A$. Thus, a signal (i.e., a signal $P1\_no\_IQS[n]$) obtained from multiplying the signal $C\_II\_I[n]$ and the signal $B\_II\_I[n]$ shows a more noticeable peak, which is beneficial to the determination of subsequent circuits.

A determination circuit 66 in FIG. 6 includes a peak detecting unit 661, a P1 position determining unit 662 and a fraction carrier frequency offset (fCFO) estimating unit 663. The peak detecting unit 661 detects a peak of the signal $P1\_no\_IQS[n]$ (a determination result more accurate than the signal $C\_II\_I[n]$ may be obtained at this point), and the fCFO estimating unit 663 obtains the carrier frequency offset of the input signal from the signal $P1\_no\_IQS[n]$. More specifically, by calculating an argument of the signal $P1\_no\_IQS[n]$, it is obtained that:

$$\mathrm{Arg}\,(P1\_no\_IQS[n]) = \mathrm{Arg}\,(b\_C \cdot b\_B)$$

$$= -2\pi \cdot (T_B \cdot f_{SH} + T_A \cdot \Phi)$$

Thus, the fraction carrier frequency offset of the input signal $X[n]$ may be obtained:

$$\widehat{\Phi} = \frac{-\mathrm{Arg}(P1\_no\_IQS[n])/2\pi - T_B/T_A}{T_A} \qquad \ldots\ldots (17)$$

It is known from the above analysis that, using the upper path and the lower path, the P1 symbol detection circuit in FIG. 6 performs a correlation calculation according to data C and data B of the P1 symbol to obtain the signal $C\_II\_I[n]$ and the signal $B\_II\_I[n]$, respectively. In addition to having a more noticeable peak that is beneficial for determining the position of the maximum correlation value, the signal $P1\_no\_IQS[n]$ obtained from multiplying the signal $C\_II\_I[n]$ by the signal $B\_II\_I[n]$ may be used accordingly learn the fraction carrier frequency offset of the input signal $X[n]$.

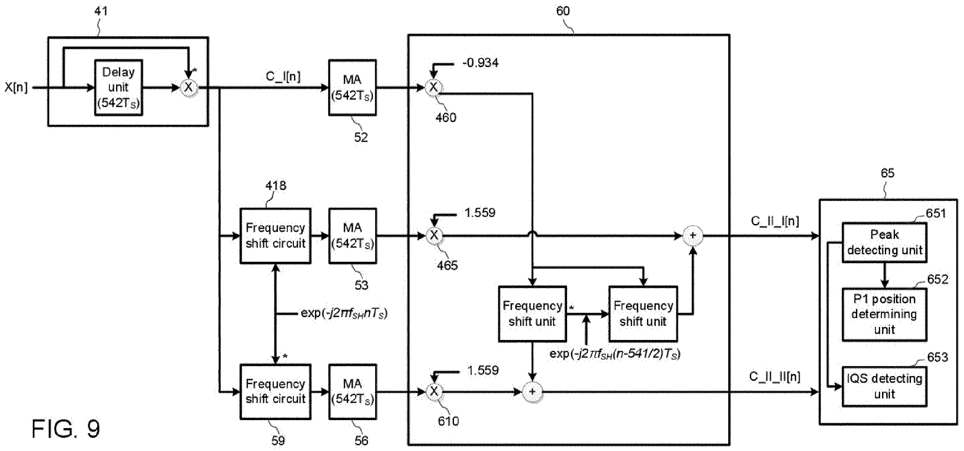

The discussion above is based on a scenario where the predetermined spectrum operation of a receiver is consistent with the spectrum of signals transmitted from a transmitter, i.e., in a situation without spectral inversion. However, the present invention further provides a P1 symbol detection circuit capable of simultaneously detecting spectral inversion. FIG. 9 shows a circuit diagram of a P1 symbol detection circuit according to another embodiment of the present invention. In this circuit, the signal $C\_I[n]$ having undergone frequency shift (frequency shift and conjugate complex calculation performed by a frequency shift circuit 59) is processed by an additional moving average circuit 56, and then calculated by the calculation circuit 60 obtain a signal $C\_II\_II[n]$. Thus, a subsequent determination circuit 65 may learn whether the input signal $X[n]$ contains spectral inversion according to which of the signals $C\_II\_I[n]$ and $C\_II\_II[n]$ has a larger maximum correlation value (the same may be applied to the signal $B\_II\_I[n]$ and a signal $B\_II\_II\_[n]$). Apeak detecting unit 651 of the determination circuit 65 at the same time detects peaks of the signal $C\_II\_I[n]$ and the signal $C\_II\_II[n]$, transmits the positions of the two peaks to a P1 position determining unit 652, and transmits sizes (i.e., absolute values) of the two peaks to an IQS detecting unit 653. The IQS detecting unit 653 compares the sizes of the two peaks to learn whether spectral inversion is present, and a subsequent compensation circuit then determines the accurate position of the P1 symbol according to the output of the P1 position determining unit 652.

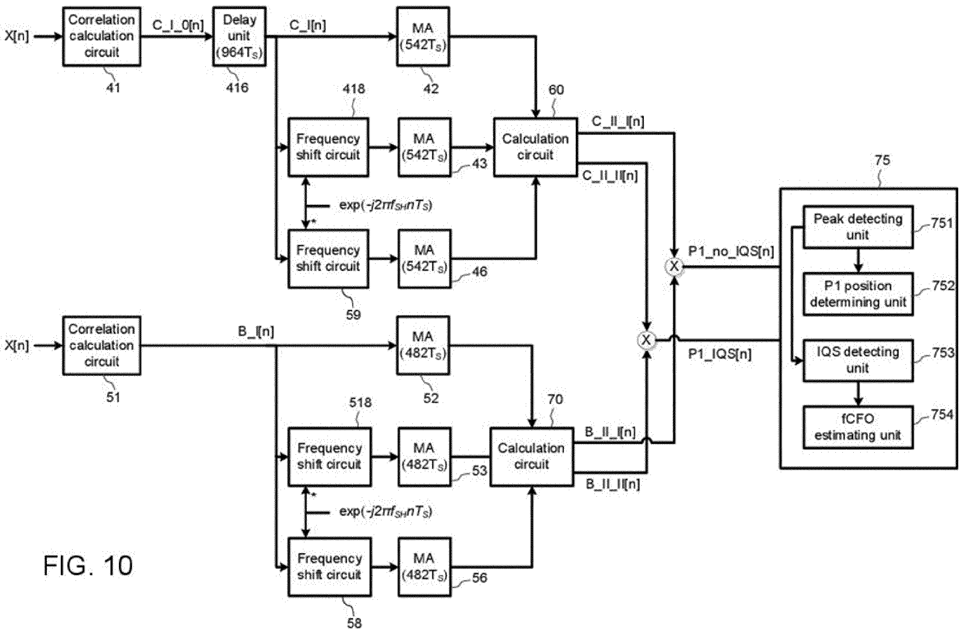

FIG. 10 shows a circuit diagram of a P1 symbol detection circuit according to another embodiment of the present invention. The signal $C\_II\_I[n]$ and the signal $C\_II\_II[n]$ (same for the signal $B\_II\_I[n]$ and a signal $B\_II\_II[n]$) respectively correspond to a non-spectral inverted signal and a spectral inversion correlation signal, and the continuous wave interference component has been removed from both of the signals; that is, the co-channel interference that the input signal $X[n]$ suffers from has been resolved after the calculations of the calculation circuit 60 an a calculation circuit 70 (having a circuit identical to that of the calculation circuit 60, and associated coefficients may be referred from FIG. 7). The waveforms of the signal $C\_II\_I[n]$ (or $C\_II\_II[n]$) and the signal $B\_II\_I[n]$ (or the signal $B\_II\_II[n]$) are as shown in FIG. 8. Because the signal $C\_II\_I[n]$ (or $C\_II\_II[n]$) is delayed by $964T_S$, a signal $P1\_no\_IQS[n]$ (or the signal $P1\_IQS[n]$) obtained from multiplying by the signal $B\_II\_I[n]$ (or the signal $B\_II\_II[n]$) has a more noticeable maximum value, which is beneficial for the determination of a subsequent determination circuit. Further, the determination circuit may compare the maximum values of $P1\_no\_IQS[n]$ and $P1\_IQS[n]$ to learn whether the input signal $X[n]$ contains spectral inversion, and the carrier frequency offset of the input signal $X[n]$ may be further obtained according to one of $P1\_no\_IQS[n]$ and $P1\_IQS[n]$ (as shown in equation (17)). A determination circuit 75 in FIG. 10 includes a peak detecting unit 751, a P1 position determining unit 752, an IQS detecting unit 753 and an fCFO estimating unit 754. The fCFO estimating unit 754 is identical to the fCFO estimating unit 663 in the embodiment in FIG. 6. However, the fCFO estimating unit 754 is further coupled to the IQS detecting unit 753, and is thus capable of correctly selecting the signal $P1\_no\_IQS[n]$ for calculation. Details of other determinations that the determination circuit 75 performs on the $P1\_no\_IQS[n]$ and the signal $P1\_IQS[n]$ are as previously given in the description associated with the function units, and shall be omitted herein.

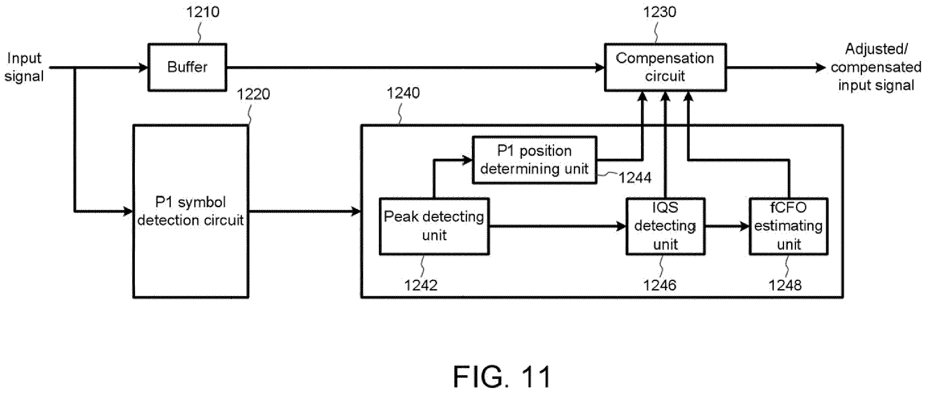

FIG. 11 shows a schematic diagram of a P1 symbol detection circuit of the present invention applied in conjunction with a determination circuit to a receiver of a DVB-T2 system. A compensation circuit 1230 adjusts/compensates an input signal buffered in a buffer 1210 according to a determination result of a determination circuit 1240, such that a subsequent circuit (e.g., an FFT calculation circuit) is able to correctly process the input signal. Details of the function units included in the determination circuit 1240 are as previously given in the description associated with the foregoing function units, and shall be omitted herein.

While the invention has been described by way of example and in terms of the preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedure.

## Claims

1. A detection circuit, applied to a Digital Video Broadcasting receiver to detect a position of a data frame of an input signal, the input signal comprising a continuous wave interference component, the detection circuit comprising:

   a correlation calculation circuit (41), generating a correlation signal according to the input signal;
   a first moving average circuit (42), coupled to the correlation calculation circuit (41), performing a moving average calculation on the correlation signal to generate a first moving average result;
   a frequency shift circuit (418), coupled to the correlation calculation circuit (41), performing a frequency shift operation on the correlation signal to generate a frequency shifted correlation signal;
   a second moving average circuit (43), coupled to the frequency shift circuit (418), performing a moving average calculation on the frequency shifted correlation signal to generate a second moving average result;

a calculation circuit (44, 60), coupled to the first moving average circuit (42) and the second moving average circuit (43), eliminating the continuous wave interference component according to the first moving average result and the second moving average result and accordingly generating an output signal; and

a determination circuit (49), coupled to the calculation circuit, determining the position according to a peak of the output signal.

2. The detection circuit according to claim 1, wherein the correlation calculation circuit (41) generates the correlation signal according to the input signal having been delayed and a conjugate signal of the input signal.

3. The detection circuit according to claim 1 or 2, wherein the data frame comprises a symbol that carries modulation information of the input signal, and window lengths of the first moving average circuit (42) and the second moving average circuit (43) are smaller than one half of a time length of the symbol.

4. The detection circuit according to claim 1, 2 or 3, the frequency shift circuit (418) being a first frequency shift circuit, the detection circuit further comprising:

another correlation calculation circuit (51), generating another correlation signal according to the input signal;

a third moving average circuit (52), coupled to the another correlation calculation circuit (51), performing a moving average calculation on the another correlation signal to generate a third moving average result;

a second frequency shift circuit (518), coupled to the another correlation calculation circuit (51), performing a frequency shift operation on the another correlation signal to generate another frequency shifted correlation signal;

a fourth moving average circuit (53), coupled to the second frequency shift circuit (518), performing a moving average calculation on the another frequency shifted correlation signal to generate a fourth moving average result;

another calculation circuit (54), coupled to the third moving average circuit (52) and the fourth moving average circuit (53), eliminating the continuous wave interference component according to the third moving average result and the fourth moving average result and accordingly generating another output signal; and

a multiplier (55), coupled to the calculation circuit (44) and the another calculation circuit (54), multiplying the output signal by the another output signal to generate a target signal;

wherein, the determination circuit determines the position according to a peak of the target signal.

5. The detection circuit according to claim 4, wherein the determination circuit further determines a carrier frequency offset of the input signal according to the target signal.

6. The detection circuit according to any of claims 1, 2, 3 or 5, the output signal being a first output signal, the frequency shift circuit (418) being a first frequency shift circuit, the frequency shifted correlation signal being a first frequency shifted correlation signal, the detection circuit further comprising:

a second frequency shift circuit (59), coupled to the correlation calculation circuit (41), performing a frequency shift operation on the correlation signal to generate a second frequency shifted correlation signal;

a third moving average circuit (56), coupled to the correlation calculation circuit (41), performing a moving average calculation on a conjugate signal of the second frequency shifted correlation signal to generate a third moving average result;

wherein, the calculation circuit (60) is further coupled to the third moving average circuit (56), and further eliminates the continuous wave interference component according to the first moving average result and the third moving average result and generates a second output signal, and the determination circuit further determines spectral inversion information of the input signal according to the first output signal and the second output signal.

7. The detection circuit according to claim 6, further comprising:

another correlation calculation circuit (51), generating another correlation signal according to the input signal;

a fourth moving average circuit (52), coupled to the another moving average circuit (51), performing a moving average calculation on the another correlation signal to generate a fourth moving average result;

a third frequency shift circuit (518), coupled to the another correlation calculation circuit (51), performing a frequency shift operation on the another correlation signal to generate a third frequency shifted correlation signal;

a fifth moving average circuit (53), coupled to the third frequency shift circuit (518), performing a moving average calculation on the third frequency shifted correlation signal to generate a fifth moving average result;

a fourth frequency shift circuit (58), coupled to the another correlation calculation circuit (51), performing a frequency shift operation on the another correlation signal to generate a fourth frequency shifted correlation signal;

a sixth moving average circuit (56), coupled to the fourth frequency shift circuit (58), performing a moving average calculation on a conjugate signal of the fourth frequency shifted signal to generate a sixth moving average result;

another calculation circuit (70), coupled to the fourth moving average circuit (52), the fifth moving average circuit (53) and the sixth moving average circuit (56), eliminating the continuous wave interference component according to the fourth moving average result and the fifth moving average result and accordingly generating a third output signal, and eliminating the continuous wave interference component according to the fourth moving average result and the sixth moving average result and accordingly generating a fourth output signal;

a first multiplier, coupled to the calculation circuit (60) and the another calculation circuit (70), multiplying the first output signal by the third output signal to generate a first target signal; and

a second multiplier, coupled to the calculation circuit (60) and the another calculation circuit (70), multiplying the second output signal by the fourth output signal to generate a second target signal;

wherein, the determination circuit determines the position according to a peak of the first target signal and a peak of the second target signal.

8. The detection circuit according to claim 7, wherein the determination circuit further determines a carrier frequency offset of the input signal according to the first target signal and the second target signal, and/or spectral inversion information of the input signal according to at least one of the first target signal and the second target signal.

9. A detection method, applied to a Digital Video Broadcasting receiver to detect a position of a data frame of an input signal, the input signal comprising a continuous wave interference component, the detection method comprising:

generating a correlation signal according to the input signal;
performing a first moving average calculation on the correlation signal to generate a first moving average result;
performing a frequency shift operation on the correlation signal to generate a frequency shifted correlation signal;
performing a second moving average calculation on the frequency shifted correlation signal to generate a second moving average result;
eliminating the continuous wave interference component according to the first moving average result and the second moving average result and accordingly generating an output signal; and
determining the position according to a peak of the output signal.

10. The detection method according to claim 9, wherein the step of generating the correlation signal according to the input signal generates the correlation signal according to the input signal having been delayed and a conjugate signal of the input signal.

11. The detection method according to claim 9 or 10, wherein the data frame comprises a symbol that carries modulation information of the input signal, and a first window length according to which the first moving average result is generated and a second window length according to which the second moving average result is generated are smaller than one half of a time length of the symbol.

12. The detection method according to claim 9, 10 or 11, further comprising:

generating another correlation signal according to the input signal; performing a third moving average calculation on the another correlation signal to generate a third moving average result;
performing a frequency shift operation on the another correlation signal to generate another frequency shifted correlation signal;
performing a fourth moving average calculation on the another frequency shifted correlation signal to generate a fourth moving average result;
eliminating the continuous wave interference component according to the third moving average result and the fourth moving average result and accordingly generating another output signal;
multiplying the output signal by the another output signal to generate a target signal; and
determining the position according to a peak of the target signal;
wherein the method preferably further comprises determining a carrier frequency offset of the input signal according to the target signal.

**13.** The detection method according to any of claims 9 to 12, the output signal being a first output signal, the method further comprising:

performing a third moving average calculation on a conjugate signal of the frequency shifted correlation signal to generate a third moving average result;
eliminating the continuous wave interference component according to the first moving average result and the third moving average result, and generating a second output signal; and
determining spectral inversion information of the input signal according to the first output signal and the second output signal.

**14.** The detection method according to claim 13, further comprising:

generating another correlation signal according to the input signal;
performing a fourth moving average calculation on the another correlation signal to generate a fourth moving average result;
performing another frequency shift operation on the another correlation signal to generate another frequency shifted correlation signal;
performing a fifth moving average calculation on the another frequency shifted correlation signal to generate a fifth moving average result;
performing a sixth moving average calculation on a conjugate signal of the another frequency shifted signal to generate a sixth moving average result;
eliminating the continuous wave interference component according to the fourth moving average result and the fifth moving average result and accordingly generating a third output signal, and eliminating the continuous wave interference component according to the fourth moving average result and the sixth moving average result and accordingly generating a fourth output signal;
multiplying the first output signal by the third output signal to generate a first target signal;
multiplying the second output signal by the fourth output signal to generate a second target signal; and
determining the position according to a peak of the first target signal and a peak of the second target signal.

**15.** The detection circuit according to any of claims 1 to 8 or the detection method according to any of claims 9 to 14, wherein the first moving average result and the second moving average result comprise the continuous wave interference component.

FIG. 1 (prior art)

FIG. 2 (prior art)

FIG. 3

EP 3 200 469 A1

X[n]

Delay unit (542$T_S$)
412

X
414

C_I_0[n]

Delay unit (542$T_S$)
420

430
+ −

Delay unit (1$T_S$)
440

C_S[n]

/542
450

−0.934

X
460

exp(−$j2\pi f_{SH}(n−541/2)T_S$)

Frequency shift unit
470

Frequency shift circuit
418

exp(−$j2\pi f_{SH} n T_S$)

Delay unit (542$T_S$)
425

435
+ +

Delay unit (1$T_S$)
445

C_T1[n]

/542
455

1.559

X
465

475
+

C_II_I[n]

49

Peak detecting unit
491

P1 position determining unit
492

FIG. 4

17

X[n]

X[n-542]

| C | A | B |

| C | A | B |

964Ts delay

C_II_I[n]

Amplitude

Time

FIG. 5

66

661 — Peak detecting unit

662 — P1 position determining unit

663 — fCFO estimating unit

P1_no_IQS[n]

55 ⊗

C_II_I[n]

B_II_I[n]

44 — Calculation circuit

54 — Calculation circuit

42 — MA (542T$_S$)

43 — MA (542T$_S$)

52 — MA (482T$_S$)

53 — MA (482T$_S$)

C_I[n]

418 — Frequency shift circuit  $\exp(-j2\pi f_{SH} n T_S)$

518 — Frequency shift circuit  $\exp(-j2\pi f_{SH} n T_S)^*$

B_I[n]

416 — Delay unit (964T$_S$)

C_I_0[n]

41 — Correlation calculation circuit

51 — Correlation calculation circuit

X[n]

X[n]

FIG. 6

FIG. 7

FIG. 8

EP 3 200 469 A1

FIG. 9

EP 3 200 469 A1

X[n]

41

Delay unit (542T$_S$)

X*

C_I[n]

MA (542T$_S$)

52

-0.934

460

60

418

Frequency shift circuit

MA (542T$_S$)

53

1.559

465

C_II_I[n]

65

651

Peak detecting unit

652

P1 position determining unit

653

IQS detecting unit

$\exp(-j2\pi f_{SH} n T_S)$

Frequency shift unit

Frequency shift unit

$\exp(-j2\pi f_{SH}(n-541/2)T_S)$

59

Frequency shift circuit

MA (542T$_S$)

56

1.559

610

C_II_II[n]

22

75

751 Peak detecting unit

752 P1 position determining unit

753 IQS detecting unit

754 fCFO estimating unit

P1_no_IQS[n]

P1_IQS[n]

×

×

C_II_I[n]

C_II_II[n]

B_II_I[n]

B_II_II[n]

60 Calculation circuit

70 Calculation circuit

42 MA (542$T_S$)

43 MA (542$T_S$)

46 MA (542$T_S$)

52 MA (482$T_S$)

53 MA (482$T_S$)

56 MA (482$T_S$)

418 Frequency shift circuit

59 Frequency shift circuit

518 Frequency shift circuit

58 Frequency shift circuit

$exp(-j2\pi f_{S} nT_S)$

$exp(-j2\pi f_{S} nT_S)$

C_I[n]

B_I[n]

416 Delay unit (964$T_S$)

C_I_0[n]

41 Correlation calculation circuit

51 Correlation calculation circuit

X[n]

X[n]

FIG. 10

FIG. 11

Europäisches
Patentamt

European
Patent Office

Office européen
des brevets

# EUROPEAN SEARCH REPORT

Application Number

EP 16 20 7421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/329396 A1 (CHENG KAI-WEN [TW] ET AL) 30 December 2010 (2010-12-30) * paragraphs [0025] - [0040]; figures 1-11 * | 1-15 | INV. H04N21/43 |
| A | US 2010/296002 A1 (CHENG KAI-WEN [TW] ET AL) 25 November 2010 (2010-11-25) * paragraphs [0014] - [0035]; figures 1-4 * | 1-15 | |
| A | US 2009/262842 A1 (GU YONGRU [US] ET AL) 22 October 2009 (2009-10-22) * paragraphs [0029] - [0050]; figures 2,3 * | 1,9 | |
| A | KR 2012 0098347 A (UNIV YONSEI IACF [KR]) 5 September 2012 (2012-09-05) * paragraphs [0001] - [0056]; figures 1-7 * | 1,9 | |

TECHNICAL FIELDS
SEARCHED        (IPC)

H04N

The present search report has been drawn up for all claims

| Place of search | Date of completion of the search | Examiner |
|---|---|---|
| Berlin | 12 June 2017 | Dudley, Clifford |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 20 7421

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2017

| Patent document cited in search report | Publication date | Patent family member(s) | Publication date |
|---|---|---|---|
| US 2010329396 A1 | 30-12-2010 | CN 101931601 A<br>TW 201101711 A<br>US 2010329396 A1 | 29-12-2010<br>01-01-2011<br>30-12-2010 |
| US 2010296002 A1 | 25-11-2010 | CN 101969574 A<br>TW 201108750 A<br>US 2010296002 A1 | 09-02-2011<br>01-03-2011<br>25-11-2010 |
| US 2009262842 A1 | 22-10-2009 | NONE | |
| KR 20120098347 A | 05-09-2012 | NONE | |

EPO FORM P0459

For more details about this annex : see Official Journal of the European Patent Office, No. 12/82